Europäisches Patentamt

European Patent Office

Office européen des brevets

(11) Veröffentlichungsnummer: **0 335 304**
**A1**

(12) **EUROPÄISCHE PATENTANMELDUNG**

(21) Anmeldenummer: **89105392.8**

(22) Anmeldetag: **27.03.89**

(51) Int. Cl.⁴: **H01G 1/11**

(30) Priorität: **31.03.88 DE 3811043**

(43) Veröffentlichungstag der Anmeldung:
**04.10.89 Patentblatt 89/40**

(84) Benannte Vertragsstaaten:
**AT BE CH DE ES FR GB IT LI NL SE**

(71) Anmelder: **Standard Elektrik Lorenz
Aktiengesellschaft
Lorenzstrasse 10
D-7000 Stuttgart 40(DE)**

(84) **DE**

Anmelder: **ALCATEL N.V.
Strawinskylaan 341 (World Trade Center)
NL-1077 XX Amsterdam(NL)**

(84) **BE CH ES FR GB IT LI NL SE AT**

(72) Erfinder: **Hoffmann, Gerhard
Kloster-Banz-Strasse 4
D-8600 Bamberg(DE)**

(74) Vertreter: **Hösch, Günther, Dipl.-Ing. et al
Standard Elektrik Lorenz AG Patent- und
Lizenzwesen Postfach 30 09 29
D-7000 Stuttgart 30(DE)**

(54) **Elektrischer Kondensator.**

(57) Ein elektrischer Kondensator ist ausgerüstet mit einer als Steckverbindung ausgebildeten Abschaltsicherung.

In der Isolierkapper (8) ist eine Steckkupplung (10) vorgesehen, in die von oben und von unten je ein Kontaktstift (13;14) eingesteckt ist. Zum Trennen der Steckverbindung ist eine geringe Kraft erforderlich und die zum Öffnen der Steckverbindung erforderlichen Innendrücke unterliegen keiner großen Streuung. Die neue Sicherung kann in einfacher Weise montiert werden.

## Elektrischer Kondensator

Die Erfindung bezieht sich auf einen elektrischen Kondensator gemäß dem Oberbegriff des Anspruchs 1.

Bekannte Kondensatoren dieser Art besitzen einen Abreißdraht mit einer Sollbruchstelle, der beim Abheben des Deckels infolge zu hohen Innendrucks an der Sollbruchstelle zerrissen wird. Aus dem DE-GM 83 24 681 ist ein derartiger Kondensator bekannt, bei dem auf der dem Deckel zugewandten Stirnkontaktschicht die Zuleitung befestigt ist. Eine zwischen Deckel und Wickelkörper vorhandene Isolierkappe drückt mit einem Niederhalteabschnitt gegen den Anschlußbereich der Zuleitung auf der Stirnkontaktschicht. Bei dieser Ausführungsform der Zuleitung mit Sollbruchstelle, welche beispielsweise aus einer quer in die Zuleitung eingeschlagenen Kerbe oder einer durch mechanisches Abtragen von Zuleitungsmaterial entstandenen Kerbe besteht, unterliegen die einen Bruch der Zuleitung herbeiführenden Abreißkräfte einem relativ großen Toleranzbereich.

Mit der Erfindung soll die Aufgabe gelöst werden, eine Abschaltsicherung so auszubilden, daß sie eine einfache Herstellung und Montage gestattet. Die neue Abschaltsicherung soll bei einem geringen und definierten inneren Überdruck ansprechen.

Gelöst wird diese Aufgabe durch die im Kennzeichen des Anspruchs 1 angegebenen Maßnahmen. Die Steckverbindung macht eine einfache Montage möglich und bei einem zu hohen Innendruck ist die Trennung der Steckverbindung mit geringer Kraft gewährleistet.

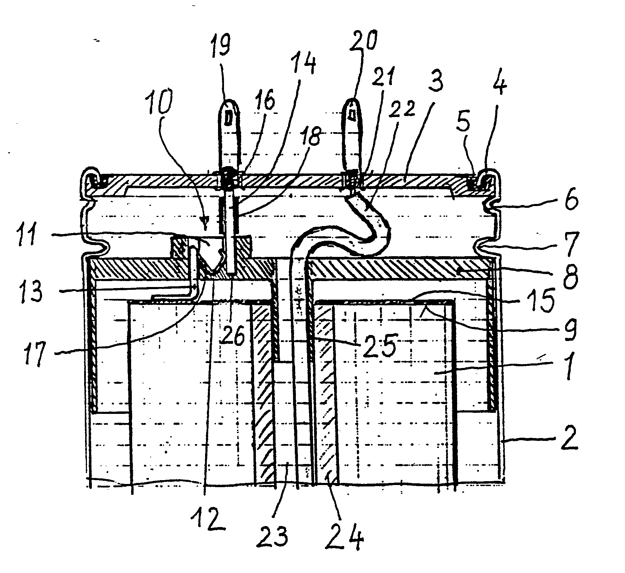

Weitere vorteilhafte Einzelheiten der Erfindung sind in den Unteransprüchen angegeben und nachfolgend anhand eines in der Zeichnung veranschaulichten Ausführungsbeispiels beschrieben.

Der Kondensatorwickelkörper 1 besteht aus wenigstens zwei dielektrischen Folien mit je einer ausheilfähig dünnen Metallschicht als Kondensatorbelag. Mit dem Kondensatorwickelkörper 1 ist daher ein Kondensator herstellbar, der selbstheilfähige Eigenschaften besitzt.

Der Kondensatorwickelkörper 1 ist in dem mit dem Deckel 3 aus Isoliermaterial verschlossenen Metallbecher 2 untergebracht. Das Verschließen erfolgte durch Umbördeln des Becherrandes 4 auf der Dichtungseinlage 5. Der Deckel 3 ruht dabei auf der im Metallbecher 2 angebrachten ersten Ringsicke 6. Im Abstand von dieser ist eine weitere tiefe, durch Druck auf den Metallbecher 2 gestauchte zweite Ringsicke 7 angebracht. Diese hält die auf den Kondensatorwickelkörper 1 aufgesteckte Isolierkappe 8 in geringem Abstand zur Stirnfläche 9 des Kondensatorwickels 1 oder drückt beide gegeneinander.

In der Isolierkappe 8 ist die Steckkupplung 10 vorgesehen, die den in einer Öffnung 11 befindlichen V-Federkontakt 12 besitzt.

Die Steckkupplung 10 ist so ausgebildet, daß sowohl von oben als auch von unten je ein kontaktierbarer Stift 13 bzw. 14 einsteckbar ist. Der Stift 13 ist mit der auf der Stirnfläche 9 aufgeschoopten Stirnkontaktschicht 15 beispielsweise durch Punktschweißen und/oder Löten befestigt und ragt senkrecht nach oben in die Steckkupplung 10.

Der Stift 14 ist in der im Deckel 3 angebrachten Löthülse 16 eingelötet und ragt von oben nach unten in die Steckkupplung 10.

Vorzugsweise ist der, den unteren Stift 13 kontaktierende Schenkel 17 der V-Kontaktfeder 12 am Ende mit einer Kralle z.B. in Form einer Schnittkante versehen, die nach dem Einstecken des Stiftes 13 an diesem anliegt. Durch diese Maßnahme wird erreicht, daß der Stift 13 gegen Herausziehen nach unten gesichert ist.

Tritt nun infolge eines Defekts im Kondensatorwickelkörper 1 ein Innendruck im Metallbecher 2 auf, so wird die zweite Ringsicke 7 gedehnt. Dabei wird der Deckel 3 nach oben gehoben, der obere Stift 14 aus der Steckkupplung 10 gezogen, dadurch der Steckkontakt 10, 13 getrennt und der Kondensatorstrom unterbrochen.

Die Isolierkappe 8 ändert dabei ihre Einbaulage nicht wesentlich, da sie von unten an der gedehnten Ringsicke 7 anliegt.

Auf dem oberen Stift 14 kann zur Versteifung des Stiftes 14 ein Isolierröhrchen 18, z.B. ein Schlauchabschnitt, aufgesteckt sein. Mit der Löthülse 16 ist der Außenanschluß 19 durch Nieten und gegebenenfalls zusätzliches Löten mechanisch und elektrisch verbunden.

Der zweite Außenanschluß 20 ist ebenfalls mit der im Deckel 3 angebrachten Lötöse 21 verbunden. In die Lötöse 21 ist von innen die Zuleitung 22 eingeführt und dicht eingelötet. Die Zuleitung 22 ist mit der Stirnkontaktschicht der unteren nicht dargestellten Stirnfläche des Kondensatorwickelkörpers 1 elektrisch und mechanisch verbunden. Dabei ist die Zuleitung 22 durch den zentralen Hohlraum 23 der Wickelhülse 24 geführt. Zur Verhinderung eines Durchschlags an der oberen Stirnfläche 9 besitzt die Isolierkappe 8 einen in den Hohlraum 23 hineinreichenden Rohransatz 25, durch den die Zuleitung 22 hindurchgesteckt ist.

Zweckmäßigerweise ist die Einstecktiefe des oberen Stiftes 14 durch den Boden 26 der Öffnung 11 oder einen anderen Anschlag begrenzt.

**Ansprüche**

1. Elektrischer Kondensator mit einer Abschaltsicherung, bei dem der in einem Gehäusebecher eingebaute Kondensatorwickelkörper über Zuleitungen mit im Gehäusedeckel vorgesehenen Anschlußelementen verbunden und im Gehäusebecher eine gestauchte Ringsicke vorgesehen ist, **dadurch gekennzeichnet**, daß die Abschaltsicherung als Steckverbindung ausgebildet ist.

2. Kondensator nach Anspruch 1, dadurch gekennzeichnet, daß innen am Deckel (3) eine Steckkupplung (10) und auf der benachbarten Stirnfläche des Kondensatorwickelkörpers (1) ein mit dieser zusammensteckbarer Stift (13) angebracht ist.

3. Kondensator nach Anspruch 1, dadurch gekennzeichnet, daß auf dem Kondensatorwickelkörper (1) eine Isolierkappe (8) aufgebracht ist, in welcher eine mit einer Stirnkontaktschicht (15) verbundene Steckkupplung (10) angebracht ist und vom Deckel (3) aus ein Stift (14) in die Steckkupplung (10) ragt.

4. Kondensator nach Anspruch 3, dadurch gekennzeichnet, daß in der Isolierkappe (8) ein Anschlag (Boden 26) für den Stift (14) vorgesehen ist.

5. Kondensator nach Anspruch 4, dadurch gekennzeichnet, daß der Stift (14) in eine im Deckel (3) angebrachte Lötöse (16) eingelötet ist.

6. Kondensator nach Anspruch 1, dadurch gekennzeichnet, daß auf dem Kondensatorwickelkörper (1) eine Isolierkappe (8) aufgebracht ist, an welcher eine sowohl vom Deckel (3) als auch von der Stirnseite (9) her kuppelbare Steckkupplung (10) befestigt ist und sowohl am Deckel (3) als auch auf der Stirnseite (9) je ein mit der Steckkupplung (10) zusammenwirkender Stift (13, 14) angebracht ist.

7. Kondensator nach Anspruch 6, dadurch gekennzeichnet, daß der mit dem an der Stirnkontaktschicht (15) angebrachten Stift (13) zusammenwirkende Schenkel (17) der Steckkupplung (10) eine der Arretierung des Stiftes (13) in Steckposition dienende Kralle besitzt.

P 38 11 043.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 291 291 (BRITISH INSULATED CALLENDER'S CABLES LTD) * Seite 1, Zeilen 51-69; Seite 1, Zeile 84 - Seite 2, Zeile 120; Figur 1 * --- | 1,2 | H 01 G 1/11 |
| X | FR-A-2 140 010 (BRITISH INSULATED CALLENDAR'S CABLES LTD) * Seite 1, Zeile 35 - Seite 3, Zeilen 3,21-24; Figur 1 * --- | 1,2 | |
| A | DE-A-2 402 501 (LICENTIA PATENT-VERWALTUNGS-GmbH) * Seiten 2,3; Figur 1 * ----- | 1-6 | |

| | RECHERCHIERTE SACHGEBIETE (Int. Cl.4) |
|---|---|
| | H 01 G H 01 M |

Der vorliegende Recherchenbericht wurde für alle Patentansprüche erstellt

| Recherchenort | Abschlußdatum der Recherche | Prüfer |
|---|---|---|
| DEN HAAG | 03-07-1989 | MES L.A. |